# EUROPEAN PATENT SPECIFICATION

(11) **EP 4 450 217 B1**
(45) Date of publication and mention of the grant of the patent: **28.01.2026**
(21) Application number: 23759802.4
(22) Date of filing: 15.02.2023
(51) Int. Cl.: B23Q 3/06, B25B 5/06, B23Q 1/00, B23Q 3/08, B23Q 17/00

(54) **CLAMP DEVICE**
KLEMMVORRICHTUNG
DISPOSITIF DE SERRAGE

(30) Priority: 28.02.2022 JP 2022030307
(43) Date of publication of application: 23.10.2024
(73) Proprietor: Kosmek Ltd., Kobe-shi, Hyogo 651-2241 (JP)
(72) Inventor: KAJI, Kenta, Kobe City, Hyogo 651-2241 (JP)
(74) Representative: Kramer Barske Schmidtchen Patentanwälte PartG mbB
(86) International application number: PCT/JP2023/005112
(87) International publication number: WO 2023/162801

(56) References cited:
- EP-A1- 2 177 309
- WO-A1-2014/002684
- JP-A- 2012 101 345
- JP-A- 2017 144 546
- JP-A- 2017 154 212
- JP-A- 2019 090 453
- JP-A- 2020 066 060
- US-A1- 2015 285 280
- US-B2- 10 018 191

## Description

### [TECHNICAL FIELD]

The present invention relates to a clamp device for fixing an object to be clamped such as a workpiece, a mold or a tool on a table, a robot hand or the like by pressing an inner peripheral surface of a hole formed in the object to be clamped, and more particularly relates to a clamp device including detection valves for detecting operating states of the clamp device.

### [BACKGROUND ART]

This type of clamp device has been described in the prior art, Patent Document 1 (Japan, Japanese Unexamined Patent Application Publication No. 2014-008598). The prior art is configured as follows:
A piston is inserted into a cylinder hole formed in a housing so as to be capable of moving vertically. A piston rod is integrally protruded from the piston, and a lower end of the clamp rod is inserted into a cylinder hole of a cylindrical portion formed at an upper end of the clamp rod so as to be capable of moving horizontally. A wedge portion is formed at the upper end of the clamp rod, and a grip member is engaged in the wedge portion. The grip member is moved horizontally by a vertical movement of the clamp rod. When the grip member is externally fitted into a hole of a workpiece, the grip member is capable of engaging with an inner peripheral surface of the hole. In addition, a flow path through which flows pressured fluid for detection is formed in the housing. A detection valve is provided in a middle of the flow path. By moving the piston downward from an upper limit position, the flow path is switched from a blocked state to an open state by the detection valve. The detection valve is configured as follows. A valve member is inserted between an outer peripheral surface of the clamp rod and an inner peripheral surface of the cylinder hole so as to be capable of moving vertically. A manipulation part is protruded radially outward from the outer peripheral wall of the clamp rod. The manipulation part faces the valve member at a predetermined interval so that it can be engaged with the valve member from above. A valve surface formed on an upper part of the valve member is capable of engaging with a valve seat formed in the cylinder hole. When the piston is lowered (overstroke) from a release position, which is the upper limit position, beyond a lock position where an engagement member engages with the inner peripheral surface of the hole of the workpiece, the manipulation part of the piston rod engages with the valve member, and thereafter moves the valve member downward. According to this, the valve surface is separated from the valve seat and the detection valve is opened. Thus, the detection valve detects the piston overstroke.

### [RELATED ART DOCUMENTS]

### [PATENT DOCUMENTS]

Patent Document 1: Japanese Unexamined Patent Application Publication No. 2014-008598

### [DISCLOSURE OF THE INVENTION]

### [PROBLEMS TO BE SOLVED BY THE INVENTION]

The prior art is superior in that the detection valve reliably detects that the piston has been lowered beyond the lock position (overstroke). In addition to this, it is desired that a detection valve capable of detecting that the piston has moved to the release position be provided in a different location from the above-mentioned detection valve in the housing. In this case, it can be implemented by arranging two of the above-mentioned detection valves above and below, but the overall dimention of the clamp device increases due to the increase in the number of parts. Therefore, there is still room for improvement in the conventional clamp device in terms of creating a simple configuration with a plurality of detection valves for detecting operation states.

An object of the present invention is to provide a clamp device having a simple configuration including a plurality of detection valves for detecting an operation state.

### [MEANS TO SOLVE THE PROBLEM]

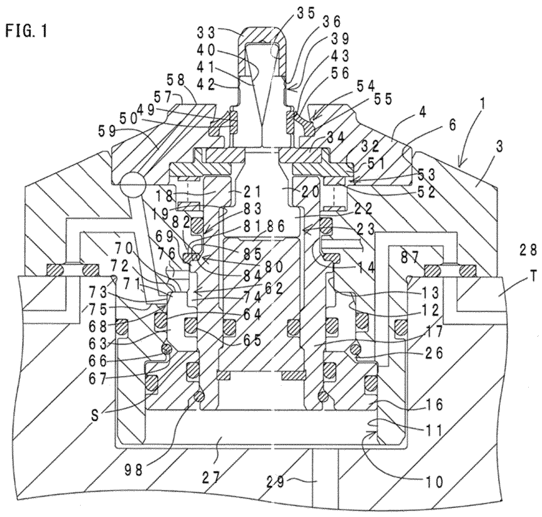

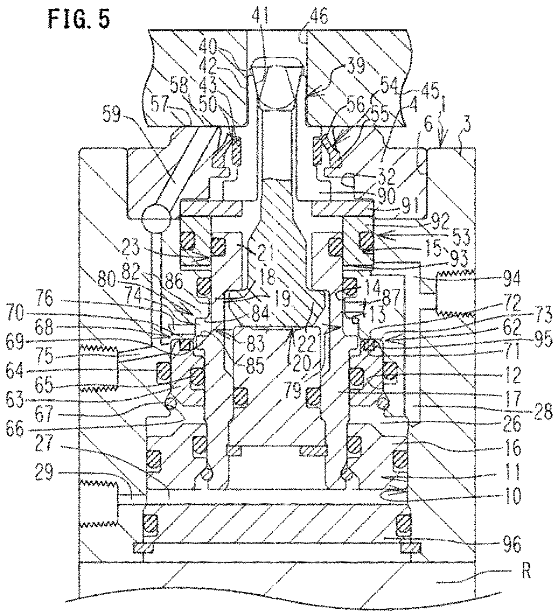

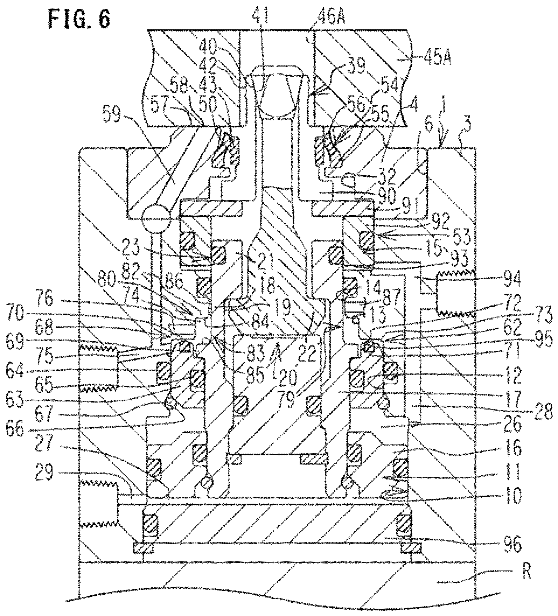

In order to achieve the above object, the present invention includes, for example, as shown in FIGS. 1 to 3, 4 to 6, and 7, a cylinder device having an operation detection valve for detecting a release state and an overstroke state is configured as follows.

A piston 16 is inserted into a cylinder hole 10 formed in a housing 1 so as to be capable of moving in an axial direction. An output member 23 is protruded from the piston 16 on a tip side in the axial direction. An engagement member 39 engages with a wedge portion 41 formed in the output member 23. The engagement member 39 is moved in a direction intersecting the axial direction by the movement of the output member 23 in the axial direction. The engagement member 39 is externally fitted by a hole 46 of an object to be clamped 45 and is capable of engaging on the inner peripheral surface of the hole 46. A first flow path 61 for a pressure fluid for detection is formed in the housing 1. A first detection valve 62 is provided in the middle portion of the first flow path 61. The piston 16 or the output member 23 moves to a predetermined position on the base end side in the axial direction, causing the first detection valve 62 to block or open the first flow path 61. A second flow path 79 for the pressure fluid for detection is formed in the housing 1. A second detection valve 80 is provided in the middle portion of the second flow path 79. The piston 16 or the output member 23 moves to a predetermined position on the tip side in the axial direction, causing the second detection valve 80 to block or open the second flow path 79. The first detection valve 62 includes a cylindrical valve member 63, a manipulation part 69, a first valve seat 71, and a first valve surface 72. The cylindrical valve member 63 is inserted between the outer peripheral surface of the output member 23 and the inner peripheral surface of the cylinder hole 10 so as to be capable of moving in the axial direction in a tight manner. Further, the cylindrical valve member 63 is faced to the piston 16 or the output member 23 at a predetermined interval in the axial direction so as to be capable of being contacted. The manipulation part 69 protruding from the outer peripheral wall of the output member 23 in a direction intersecting with respect to the axial direction is faced to the valve member 63 at a predetermined interval in the axial direction so as to be capable of engaging. The first valve seat 71 is formed in the cylinder hole 10. The first valve surface 72 formed on the cylindrical valve member 63 is capable of engaging with the first valve seat 71. The second detection valve 80 includes a second valve seat 84 and a second valve surface 85. The second valve seat 84 is formed in the cylinder hole 10. The second valve surface 85 formed on the manipulation part 69 is capable of engaging with the second valve seat 84.

The present invention has the following effect.

Since the valve member of the second detection valve is configured by the manipulation part operating the valve member of the first detection valve, there is no need to separately provide a valve member for the second detection valve. According to this, the number of parts can be reduced, and the overall dimention of the clamp device can be kept small by the reduced number of parts. Therefore, a clamp device having two detection valves capable of detecting the operation state is capable of being made in a simple configuration.

### [BRIEF DESCRIPTION OF THE DRAWINGS]

FIG. 1 shows a first embodiment of the present invention and is a cross-sectional view showing a release state of a clamp device.
FIG. 2 is a cross-sectional view showing a lock state of the clamp device of the first embodiment.
FIG. 3 is a cross-sectional view showing an overstroke state of the clamp device of the first embodiment.
FIG. 4 shows a second embodiment of the present invention and is a cross-sectional view showing a release state of the clamp device.
FIG. 5 is a cross-sectional view showing a lock state of the clamp device of the second embodiment.
FIG. 6 is a cross-sectional view showing an overstroke state of the clamp device of the second embodiment.
FIG. 7 shows a third embodiment of the present invention and is a cross-sectional view showing a release state of the clamp device.
FIG. 8 shows a fourth embodiment of the present invention and is a cross-sectional view showing a release state of the clamp device.
FIG. 9 is a cross-sectional view showing a lock state of the clamp device of the fourth embodiment.
FIG. 10 is a cross-sectional view showing an overstroke state of the clamp device of the fourth embodiment.
FIGS. 11A and 11B are partial enlarged views of the clamp device of the fourth embodiment, and correspond to FIGS. 8 and 9, respectively.
FIG. 12 shows a fifth embodiment of the present invention and is a cross-sectional view showing a release state of the clamp device.

### [PREFERRED EMBODIMENT OF THE INVENTION]

The first embodiment of the present invention will be described with reference to FIG. 1 to FIG. 3. First, a structure of a clamp device will be described based on FIG. 1 which shows a release state.

A housing 1 of the clamp device is inserted into a mounting hole formed on a table T of a machine tool to be bolted on the table T. The housing 1 includes a lower housing 3 and an upper housing 4. Lower half of the lower housing 3 is inserted into the mounting hole of the table T in a tight manner. Upper half of the lower housing 3 is protruded upward from the table T and fixed to the table T by a plurality of bolts (not shown). The upper housing 4 is inserted into a mounting hole 6 vertically formed on the upper portion of the lower housing 3 to be bolted to the bottom portion of the mounting hole 6.

The cylinder hole 10 is formed in the lower housing 3 vertically. The cylinder hole 10 has a first hole 11, a second hole 12, a third hole 13, and a fourth hole 14 formed so that its diameter dimension decreases in order from the lower side. A piston 16 is inserted into the first hole 11 in a tight manner so as to be capable of moving vertically (in the axial direction). A piston rod 17 is protruded upward from the piston 16, and the piston rod 17 is inserted into the fourth hole 14 through the second hole 12 and the third hole 13 in a tight manner so as to be capable of moving vertically. A cylinder portion 18 is formed at the upper portion of the piston rod 17, and a clamping rod 20 is inserted in a cylinder hole 19 of the cylinder portion 18 so as to be capable of moving horizontally. A protrusion portion 21 is provided to protrude radially inward from the inner peripheral wall of the cylinder portion 18. The protrusion portion 21 faces a flange portion 22 provided at the lower portion of the clamp rod 20 to protrude radially outward from above for contact, so that the clamp rod 20 is prevented from exiting upward from the cylinder hole 19 of the piston rod 17. Here, in the present embodiment, the piston rod 17 and the clamp rod 20 constitute an output member 23.

A lock chamber 26 is formed on the upper side of the piston 16, and a release chamber 27 is formed between the piston 16 and the bottom wall of the mounting hole of the table T. A lock supply/discharge path 28 communicated to the lock chamber 26 is formed in the housing 1. According to this, pressure oil from a pressure oil source is supplied to the lock chamber 26 through the lock supply/discharge path 28, and the pressure oil in the lock chamber 26 is discharged to the outside through the supply/discharge path 28. Further, a release supply/discharge path 29 is formed on the bottom wall of the mounting hole of the table T. According to this, the pressure oil from the pressure oil source is supplied to the release chamber 27 through the supply/discharge path 29, and the pressure oil in the release chamber 27 is discharged to the outside through the supply/discharge path 29.

An accommodation hole 32 communicating with the cylinder hole 10 is formed in the upper housing 4. A cylindrical cap member 33 is inserted into the accommodation hole 32 so as to be capable of moving horizontally and vertically with respect to the housing 1. The upper half of the cap member 33 is provided to protrude upward from the upper surface of the upper housing 4. A flange portion 34 is formed at the lower part of the cap member 33 circumferentially so as to protrude radially outward. The upper surface of the flange portion 34 faces the ceiling wall surface of the accommodation hole 32 from below so as to be capable of being in contact with the ceiling wall surface, and the cap member 33 is prevented from coming off from the accommodation hole 32.

The clamp rod 20 is inserted in the cylinder hole 35 of the cap member 33 so as to be capable of moving vertically. Two support holes 36 pass radially through the peripheral wall of the cap member 33, and an engagement member 39 is inserted into each support hole 36 so as to be capable of moving along the support hole 36. A receiving surface 40 is formed on the inner wall of the engaging member 39 so as to taper toward the tip (upward). Further, a wedge surface (wedge portion) 41 is formed on the side wall of the upper end of the clamp rod 20 so as to become thicker (moves away from the axis) toward the tip (upward), and the wedge surface 41 is engaged from above with the receiving surface 40 of the engagement member 39.

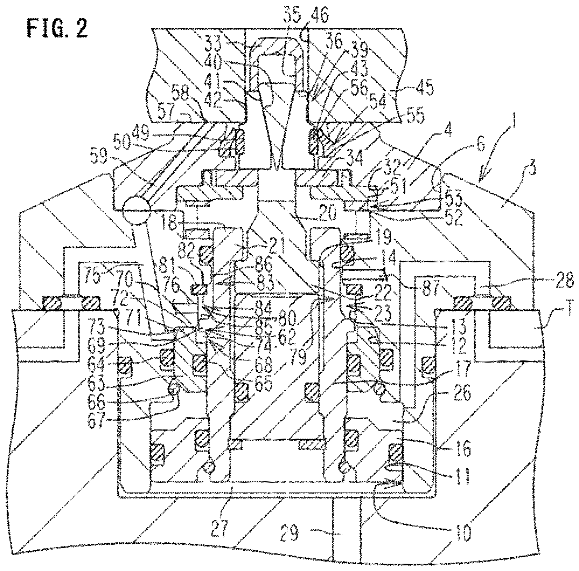

An engagement portion 42 is formed on upper half of the outer wall of the engagement member 39 described above. A plurality of protrusions are formed vertically on the engagement portion 42 so as to extend horizontally. The protrusions are capable of engaging with the inner peripheral wall of a hole 46 of a workpiece (object to be clamped) 45 as shown in FIG. 2.

Further, a mounting groove 43 is formed in lower half of the outer wall of the engagement member 39 horizontally, and a mounting groove 49 is also formed on the outer peripheral wall of the cap member 33 so as to correspond to the height position of the mounting groove 43 of the engagement member 39. One elastic ring 50 is so mounted as to straddle the mounting groove 43 of the engagement member 39 and the mounting groove 49 of the cap member 33. The elastic force of the elastic ring 50 urges the engagement member 39 radially inward of the cap member 33. In the present embodiment, the elastic ring 50 is made of rubber, but is not limited this, and may be made of resin, a metal spring, or the like.

In the accommodation hole 32, a spring receiving member 51 and an advance spring 52 are inserted into the lower side of the cap member 33. The lower end of the advance spring 52 is received on the upper surface of the lower housing 3, and the upper end of the advance spring 52 is received on the ceiling surface of the accommodation hole 32 throuth the spring receiving member 51 and the flange portion 34 of the cap member 33. According to this, the advance spring 52 urges the cap member 33 upward with respect to the lower housing 3. In this embodiment, the advance spring 52 and the spring receiving member 51 constitute a support mechanism 53 that pushes up the engagement member 39 with a predetermined force. Note that the present invention is not limited to the support mechanism 53 as described above, and a support mechanism of a second embodiment described later may be employed.

The base 55 of a dust seal 54 is attached to the upper part of the inner peripheral wall of the accommodation hole 32. The tip 56 of the dust seal 54 is engaged with the outer peripheral surface of the cap member 33 and the outer wall surface of the engagement member 39. The dust seal 54 prevents foreign matter such as chips from entering the housing 1 from the gap between the cap member 33 and the housing 1 or the gap between the engagement member 39 and the housing 1. Further, the radially inward elastic force of the dust seal 54 urges the clamp rod 20, the engagement member 39, and the cap member 33 radially inward toward the axial center of the cylinder hole 10.

A seating surface (seating portion) 57 is configured by a part (or all) of the upper end surface of the upper housing 4, and the workpiece 45 can be placed on the seating surface 57. A spouting port 58 is opened on the seating surface 57, and a supply path 59 communicated with the spouting port 58 is formed in the housing 1. According to this, compressed air for seating detection from a compressed air source (pressure fluid source) is ejected from the spouting port 58 through the supply path 59.

In the clamp device of the present embodiment, a first flow path 61 that supplies compressed air (pressure fluid) for detecting the operation state is provided in the housing 1. A first detection valve 62 is provided in the middle of the first flow path 61. The first detection valve 62 is to detect that the piston 16 and the output member 23 have been lowered by a predetermined distance beyond the lock position (overstroke state among the operation states), and is configured as follows as shown in FIG. 1.

A cylindrical valve member 63 is inserted between the outer peripheral surface of the piston rod 17 and the inner peripheral surface of the second hole 12 of the cylinder hole 10 so as to be capable of moving vertically (in the axial direction) in a sealed manner by the outer sealing member 64 and the inner sealing member 65. Further, a stop ring 67 is mounted into a mounting groove 66 formed at the lower portion of the inner peripheral wall of the second hole 12, and the stop ring 67 prevents the valve member 63 from falling downward from the second hole 12. The above-described lock chamber 26 is partitioned and formed between the valve member 63 and the piston 16. Further, a first valve chamber 68 is formed on the upper side of the valve member 63.

The lower surface of the valve member 63 is capable of engaging with the upper surface of the piston 16. Further, the inner peripheral side portion of the valve member 63 is formed so that the height dimension is lower than that of the outer peripheral side portion of the valve member 63. The lower surface of an annular manipulation part 69 protruding radially outward from the outer peripheral surface of the piston rod 17 is capable of engaging with the upper surface of the inner peripheral side portion of the valve member 63. The upper surface of the outer peripheral side portion of the valve member 63 is capable of being in contact with a step portion (ceiling surface of the second hole) 70 formed between the second hole 12 and the third hole 13. According to this, when the piston 16 is lowered from the upper limit position to the lower limit position, the manipulation part 69 engages with the valve member 63 at the middle position, and the valve member 63 is lowered to the engagement position between the valve member 63 and the stop ring 67. Further, when the piston 16 moves from the lower limit position to the upper limit position, the piston 16 engages with the valve member 63 at the middle position, and then the valve member 63 is raised to the engagement position between the valve member 63 and the step portion 70 (upper limit position).

An annular first valve seat 71 is formed on an annular step portion 70 formed between the second hole 12 and the third hole 13 of the cylinder hole 10. A first valve surface 72, which is in contact with the first valve seat 71, is formed on the upper surface of the outer peripheral side portion of the valve member 63. Since the first valve surface 72 is engaged with the first valve seat 71, the first valve chamber 68 is divided into a first inlet chamber 73 on the outer peripheral side and an outlet chamber 74 on the inner peripheral side.

A first supply path 75 communicating with the first inlet chamber 73 is formed in the housing 1 and opened to the inner peripheral surface of the second hole 12. According to this, compressed air (pressure fluid) from the compressed air source (pressure fluid source) is supplied to the first inlet chamber 73 of the first valve chamber 68 through the first supply path 75. The above-described supply path 59 branches from the middle of the first supply path 75. Further, a discharge path 76 communicating with the outlet chamber 74 is formed in the housing 1 and opened to the inner peripheral surface of the third hole 13. According to this, the compressed air in the first valve chamber 68 is discharged to the outside of the housing 1 through the discharge path 76. Here, in the clamp device of the present embodiment, the first flow path 61 is configured by the first supply path 75, the first valve chamber 68 including the first inlet chamber 73 and the outlet chamber 74, and the discharge path 76.

In the clamp device of the present embodiment, in order to detect an operation state different from the above-mentioned overstroke, a second flow path 79, which supplies compressed air (pressure fluid) for detecting an operation state, is provided in the housing 1. A second detection valve 80 is provided in the middle of the second flow path 79. The second detection valve 80 detects that the piston 16 and the output member 23 have risen near the release position (release state among the operating states), and is configured as follows as shown in FIG. 1.

A mounting groove is formed circumferentially on the inner peripheral wall of the third hole 13 of the cylinder hole 10, and a ring-shaped sealing member 81 is mounted in the mounting groove. The upper surface of the sealing member 81 is received from above by a step portion (ceiling surface of the third hole) 82 formed between the third hole 13 and the fourth hole 14 of the cylinder hole 10. Further, the upper surface of the manipulation part 69 of the piston rod 17 is capable of engaging with the sealing member 81. According to this, near the upper limit position when the piston 16 moves from the lower position to the upper limit position, the manipulation part 69 first engages with the sealing member 81, and then crushes the sealing member 81 slightly. Thereafter, the piston 16 is received by the step portion 70 through the valve member 63. Therefore, in the release state of the clamp device in which the piston 16 has moved to the upper limit position, the second detection valve 80 is reliably closed and the first detection valve 62 is also reliably closed. In the present embodiment, the sealing member 81 is made of rubber, but is not limited thereto, and may be a resin or metal ring. Further, the sealing member 81 is configured so as to be mounted in the mounting groove of the third hole 13, but is not limited thereto. For example, a mounting groove may be formed in a ring shape on the upper portion of the manipulation part 69 of the piston rod 17, and may be configured to mount the sealing member 81.

A mounting groove is formed circumferentially on the inner peripheral wall of the fourth hole 14 of the cylinder hole 10. An O-ring is mounted in the mounting groove as a sealing member. An annular space is partitioned and formed between the inner peripheral surface of the fourth hole 14 and the outer peripheral surface of the piston rod 17 by the O-ring and the valve member 63. The annular space constitutes a second valve chamber 83.

In the second valve chamber 83, an annular second valve seat 84 is formed on the lower surface of the sealing member 81 described above. Further, an annular second valve surface 85 is formed on the upper surface of the manipulation part 69 of the piston rod 17, and the second valve surface 85 is capable of engaging with the second valve seat 84. Since the second valve surface 85 is engaged with the second valve seat 84, the second valve chamber 83 is divided into a second inlet chamber 86 on the outer peripheral side and an outlet chamber 74 on the inner peripheral side. Further, a second supply path 87 is formed in the housing 1, and opened to the inner peripheral surface of the fourth hole 14. Compressed air is supplied from the compressed air source to the second valve chamber 83 through the second supply path 87. The compressed air of the second valve chamber 83 is discharged outside the housing 1 through the outlet chamber 74 and the discharge path 76. Here, in the clamp device of the present embodiment, the second flow path 79 is configured by the second supply path 87, the second valve chamber 83 including the second inlet chamber 86 and the outlet chamber 74, and the discharge path 76. In the clamp device of the present embodiment, the second detection valve 80 and the first detection valve 62 share one outlet chamber 74, but are not limited thereto, and the outlet chamber of the second detection valve 80 is formed in a different location from the outlet chamber 74 of the first detection valve 62, and a discharge path communicated to the outlet chamber of the second detection valve 80 may be provided in the housing 1 separately from the discharge path 76.

The clamp device operates as follows, as shown in FIGS. 1 to 3.

In the clamp device in the release state shown in FIG. 1, pressure oil is discharged from the lock chamber 26, and pressure oil from the pressure oil source is supplied to the release chamber 27. The pressure oil in the release chamber 27 moves the clamp rod 20 to the upper limit position through the piston 16 and the piston rod 17.

In the release state of the clamp device, the piston 16 is received by the step portion 70 of the housing 1 through the valve member 63. According to this, the first valve surface 72 of the valve member 63 is engaged with the first valve seat 71, and the first detection valve 62 for overstroke detection is closed.

In the release state of the clamp device, the piston rod 17 is moved to the upper limit position. According to this, the second valve surface 85 of the manipulation part 69 of the piston rod 17 is engaged with the second valve seat 84, and the second detection valve 80 for release detection is closed.

In the release state, the workpiece (object to be clamped) 45 is lowered from above the clamp device by some transport means such as a robot or by the workpiece's own weight. Then, the hole 46 of the workpiece 45 is fitted at the outsides of the cap member 33 and the engagement member 39. Next, the lower surface of the workpiece 45 is received by the seating surface 57 of the housing 1. At this time, the lower surface of the workpiece 45 shields the spouting port 58 for seat detection. Further, as described above, the first detection valve 62 for overstroke detection is also closed. According to this, pressure of compressed air in the supply path 59 for supplying compressed air to the spouting port 58 and pressure of compressed air in the first supply path 75 communicated to the supply path 59 exceed the predetermined value. The exceeding pressure is detected by a pressure switch (or pressure sensor), not shown. The workpiece 45 is placed on the seating surface 57, and the fact that the piston 16, etc. is not in an overstroke state in which it is lowered beyond the locked position is detected by the first detection valve 62 and the compressed air pressure in the supply path 59.

When the clamp device is switched from the release state of FIG. 1 to the lock state of FIG. 2, the pressure oil in the release chamber 27 is discharged and pressure oil is supplied to the lock chamber 26. Then, with respect to the cap member 33 and the engagement member 39 held at the upper limit position by urging force of the advance spring 52, the pressure oil in the lock chamber 26 lowers the piston 16, the piston rod 17, and the clamp rod 20 toward the lock position. At this time, the second valve surface 85 formed on the manipulation part 69 of the piston rod 17 is separated from the second valve seat 84. Therefore, the compressed air in the second inlet chamber 86 is discharged to the outside through the outlet chamber 74 and the discharge path 76, thereby reducing pressure of compressed air in the second inlet chamber 86. According to this, pressure drop is detected by a pressure sensor (or pressure switch) (not shown). Therefore, the second detection valve 80 detects that the piston 16, etc. has been moved downward from the release position (upper limit position). Next, the wedge surface 41 of the clamp rod 20 pushes the receiving surface 40 of the engagement member 39, so that the clamp rod 20 pushes the engagement member 39 radially outward. Then, the engagement portion 42 of the engagement member 39 engages with the inner peripheral surface of the hole 46 of the workpiece 45. At this time, the clamp rod 20 is lowered through the engagement member 39, the cap member 33 and the spring receiving member 51 so as to slightly push down the advance spring 52. According to this, the workpiece 45 is strongly pressed to the seating surface 57 of the upper housing 4.

In the locked state of the clamp device shown in FIG. 2, the manipulation part 69 of the piston rod 17 is separated apart upwardly from the valve member 63 by a predetermined distance, and the manipulation part 69 does not manipulate the valve member 63. Therefore, the state in which the valve member 63 is raised to the upper limit position is maintained by pressure of pressure oil supplied to the lock chamber 26. Therefore, the first valve surface 72 is engaged with the first valve seat 71, and the first detection valve 62 is closed. Further, the lower surface of the workpiece 45 is maintained in a state in which the spouting port 58 of the housing 1 is shielded. Therefore, the state in which pressure of compressed air in the first supply path 75 exceeds the predetermined pressure is maintained.

When the clamp device is switched from the lock state of FIG. 2 to the release state of FIG. 1, pressure oil in the lock chamber 26 is discharged and pressure oil is supplied to the release chamber 27. According to this, the clamp device is switched to a release state in a procedure substantially opposite to the locking operation described above.

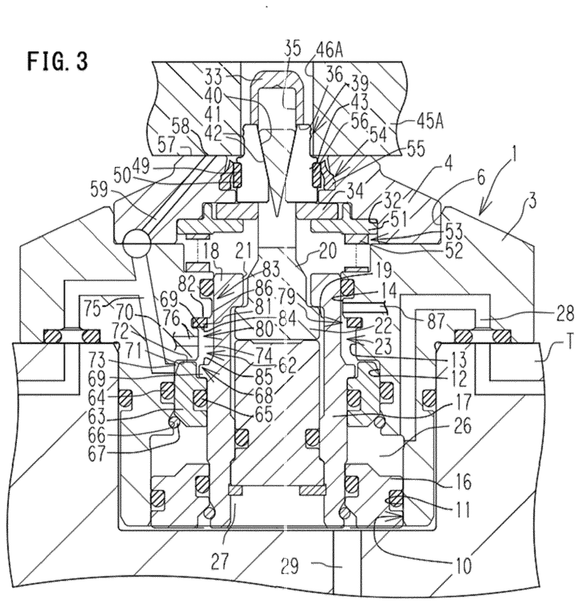

In the clamp device, as shown in FIG. 3, the piston 16 may be lowered beyond the lock position (overstroke) due to, for example, a workpiece 45A having a hole diameter larger than expected being carried in. In such a case, the clamp device operates as follows.

With the workpiece 45A having the hole 46A having an excessively large diameter placed on the seating surface 57 of the clamp device, the clamp device is lock driven. Then, the wedge surface 41 of the clamp rod 20 pushes the receiving surface 40 of the engagement member 39 while the engagement member 39 is held at the upper limit position by the urging force of the advance spring 52. Then, the clamp rod 20 pushes the engagement member 39 radially outward (excessively expands the diameter). At this time, the engagement member does not come in contact with the inner peripheral wall of the hole 46A, which is larger than expected, and the clamp rod 20 is lowered beyond the expected lock position. Then, the manipulation part 69 of the piston rod 17 engages with the valve member 63 while the inner peripheral surface of the hole 46 of the workpiece 45 and the engagement portion 42 of the engagement member 39 are not engaged. Thereafter, the manipulation part 69 lowers the valve member 63. At this time, the first valve surface 72 of the valve member 63 is separated from the first valve seat 71, and the compressed air in the first inlet chamber 73 of the first valve chamber 68 is discharged to the outside of the housing 1 through the outlet chamber 74. According to this, pressure of compressed air in the first inlet chamber 73 is reduced, and the pressure drop is detected by the pressure sensor (or pressure switch) (not shown). Therefore, based on the detection result of the pressure drop, it is detected that the piston 16 is in an overstroke state lowered beyond the lock position. Next, the valve member 63 is received from below by the stop ring 67 mounted in the first hole 11 of the cylinder hole 10, and the lowering of the valve member 63, piston rod 17, etc. is stopped.

Further, in addition to the case where the workpiece 45A having a hole diameter larger than that expected above is clamped by the clamp device, an overstroke condition may also occur as shown in FIG.3. For example, in the locked state where the workpiece 45 is fixed by the clamp device (see FIG. 2), the clamp rod 20 may break at a mid-height portion due to metal fatigue or the like. Further, when sufficient frictional force cannot be generated between the protrusions of the engagement portion 42 of the engagement member 39 and the inner peripheral surface of the workpiece 45, the protrusions may be slide down the inner peripheral surface of the workpiece 45. Another example is a case where the clamp device is operated in a state where a peripheral device collides with the engagement member 39 and a part of the engagement member 39 is missing. Even in these cases, as in the case of the workpiece 45A having the above-described excessive hole diameter 46A, the overstroke state of the clamp device is detected by the first detection valve 62 for overstroke detection.

The first embodiment above has the following advantages.

Since the valve member of the second detection valve 80 is configured by the manipulation part 69 that manipulates the valve member 63 of the first detection valve 62, there is no need to separately provide a valve member of the second detection valve 80. Therefore, the number of parts can be reduced. The first detection valve 62 and the second detection valve 80 share the outlet chamber 74 and the discharge path 76. Therefore, the inside of the housing 1 can be space-saving compared to the case where the outlet chamber 74 and the discharge path 76 are provided respectively. According to this, the overall dimensions of the clamp device can be reduced to a small dimension by the small number of parts or by saving space. Accordingly, a clamp device equipped with two detection valves capable of detecting the operating state can be made with a simple configuration.

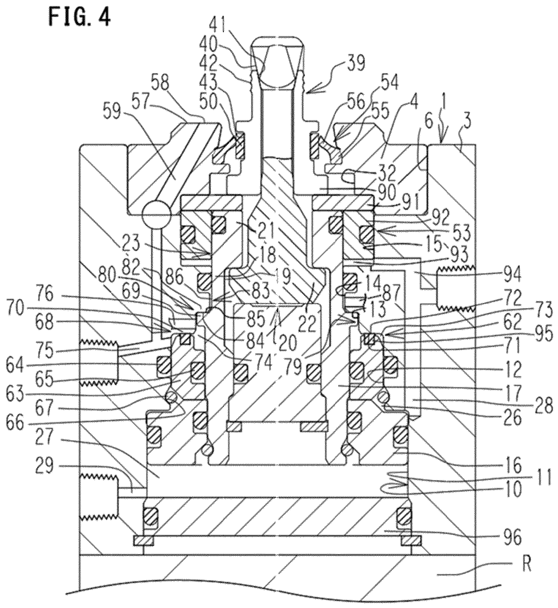

FIGS. 4 to 6 illustrate a second embodiment of the present invention. In this second embodiment, the same member (or similar member) as the constituent member of the first embodiment will be described with the same reference numeral in principle.

While the clamp device of the first embodiment is inserted into the mounting hole of the table T and fixed with bolts, in the clamp device of the second embodiment, a housing 1 is mounted on a movable portion R of a robot hand.

Further, the clamp device of the first embodiment includes a cap member 33, whereas the clamp device of the second embodiment does not include the cap member 33. According to this, two engagement members 39 are arranged on the outer peripheral side of the clamp rod 20 so as to be symmetrical around the axial center of the clamp rod 20. A mounting groove 43 is formed horizontally on the outer peripheral wall of the engagement member 39, and an annular elastic member 50 is mounted in the mounting groove 43. The radially inward urging force of the elastic member 50 pushes the engagement member 39 toward the axial center of the clamp rod 20. The engagement member 39 is inserted into the accommodation hole 32 of the upper housing 4 so as to be capable of moving vertically and radially (horizontally). The flange portion 90 is protruded from the lower part (base) of the engagement member 39 radially outward of the clamp rod 20. The flange portion 90 is face-to-face on the ceiling surface of the accommodation hole 32 so as to be capable of being in contact from above.

The clamp device of the first embodiment includes a support mechanism 53 composed of an advance spring 52 and a spring receiving member 51. In contrast, the support mechanism 53 of the clamp device of the second embodiment is configured as follows.

An annular first support member 91 is inserted into the accommodation hole 32 so as to be capable of moving vertically, and supports the engagement member 39 from below. Further, a fifth hole 15 is formed with a larger diameter than the fourth hole 14 so as to be continuous above the fourth hole 14 of the cylinder hole 10, and a cylindrical second support member 92 is inserted between the inner peripheral surface of the fifth hole 15 and the outer peripheral surface of the piston rod 17 in a sealed manner so as to be capable of moving vertically. The upper surface of the second support member 92 is formed to be capable of being in contact with the lower surface of the first support member 91. An actuator chamber 93 is compartmentalized by the fifth hole 15 of the cylinder hole 10, the second support member 92 and the piston rod 17. A communication path 94 that communicates the actuator chamber 93 and the lock chamber 26 is formed in the housing 1. According to this, when pressure oil from the pressure oil source is supplied to the lock chamber 26 through the supply/discharge path 28, the pressure oil is also supplied to the actuator chamber 93 through the supply/discharge path 28 and the communication path 94. Accordingly, the second support member 92 is raised by the pressure of the pressure oil in the actuator chamber 93, and the second support member 92 pushes the first support member 91 toward the ceiling surface of the accommodation hole 32.

Further, the lower surface of the first support member 91 is formed to be capable of being in contact with the upper surface of the piston rod 17. Therefore, when the piston 16 and the piston rod 17 are raised by pressure of pressure oil supplied to the release chamber 27, the piston rod 17 pushes the first support member 91 toward the ceiling surface of the accommodation hole 32. In the present embodiment, the support mechanism 53 is configured as described above, but is not limited thereto, and the above-described support mechanism of the first embodiment may be employed.

Further, the first detection valve 62 for overstroke detection according to the first embodiment includes a first valve surface 72 on the upper surface of the valve member 63. On the other hand, in the first detection valve 62 for overstroke detection according to the second embodiment, a sealing member 95 is mounted to an annular mounting groove opened on the upper surface of the valve member 63, and the first valve surface 72 is provided on the upper surface of the sealing member 95. In the clamp device of the present embodiment, the sealing member 95 is mounted on the valve member, but is not limited thereto, and the sealing member may be mounted in the mounting groove that opens at the step portion 70.

Further, the second detection valve 80 for release detection according to the first embodiment is provided with a second valve seat 84 on the lower surface of the sealing member 81 mounted on the inner peripheral wall of the third hole 13. On the other hand, in the second detection valve 80 for release detection according to the second embodiment, the second valve seat 84 is provided on the lower surface of the step portion 82 formed between the third hole 13 and the fourth hole 14. Therefore, near the upper limit position when the piston 16 moves from the lower position toward the upper limit position, the piston 16 first pushes the sealing member 95 of the valve member 63 upward to engage with the step portion 70 and slightly crush the sealing member 95. Thereafter, the piston 16 is stopped when the manipulation part 69 is received by the step portion 82. Therefore, in the release state of the clamp device in which the piston 16 has moved to the upper limit position, the first detection valve 62 is reliably closed and the second detection valve 80 is also reliably closed.

In the clamp device of the second embodiment, a lid member 96 that seals the lower end side opening of the cylinder hole 10 is mounted in a sealed manner. According to this, the release chamber 27 is compartmentalized by the piston 16, the lid member 96 and the cylinder hole 10. In the clamp device of the second embodiment, the lid member 96 may be omitted and the release chamber 27 may be compartmentalized by the cylinder hole 10, the piston 16, the bottom wall of the mounting hole of the table T, and the base member of the robot R, as in the clamp device of the first embodiment.

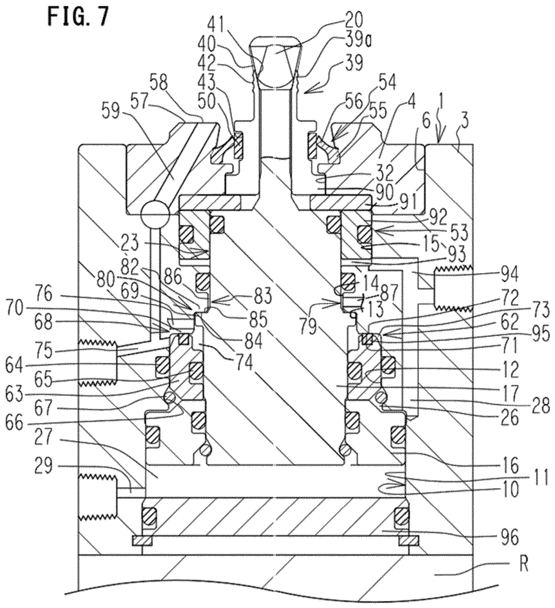

FIG. 7 shows a third embodiment of the present invention. In this third embodiment, the same member (or similar member) as the constituent member of the first and second embodiments will be described with the same reference numeral in principle.

In the clamp device of the first and second embodiments, the piston rod 17 and the clamp rod 20 are composed of separate members, and the clamp rod 20 is connected to the piston rod 17 so as to be capable of moving. On the other hand, in the clamp device of the third embodiment, the piston rod 17 and the clamp rod 20 are formed integrally, and the output member 23 is configured by the piston rod 17 and the clamp rod 20.

In the clamp device of the first embodiment, the engagement member 39 is capable of moving in the support hole 36 of the cap member 33, and in the clamp device of the second embodiment, the engagement member 39 is capable of moving horizontally on the first support member 91. On the other hand, in the clamp device of the third embodiment, the base end portion of the engagement member 39 is configured to be unable to move horizontally on the spring receiving member 51. Further, a tip portion 39a of the engagement member 39 is formed thinner than the base end portion. Therefore, as the clamp rod 20 moves downward, the wedge surface 41 of the clamp rod 20 pushes the tip portion 39a of the engagement member 39 radially outward, and the tip portion 39a is elastically deformed radially outward with respect to the base end portion.

Each of the embodiments and modifications described above can be further modified as follows.

Instead of being fixed on the table or a movable part of the robot hand, the clamp device of the above embodiment may be provided elsewhere, for example, on a movable part of a turntable or on a pallet. Further, instead of a workpiece or a tool as an object to be clamped, a workpiece pallet, a mold, or the like may be used.

Instead of arranging two engagement members 39 in the circumferential direction, one or three or more engagement members 39 may be arranged. Further, the engagement member 39 may be configured by an annular collet provided with a ball or a slit instead of being formed into a substantially rectangular shape.

The clamp device of the above embodiment is provided with an oil pressure cylinder driven by pressure oil supplied to the lock chamber 26 and the release chamber 27, alternatively, it may be a fluid pressure cylinder driven by another liquid such as a water pressure cylinder, or a pneumatic cylinder driven by a gas such as compressed air or compressed nitrogen. Instead of the double-acting type illustrated, the oil pressure (fluid pressure) cylinder may be lock driven by pressure fluid and released by spring force, or lock driven by spring force and released by pressure fluid.

Instead of being placed vertically, the clamp device may be placed upside down, sideways, or diagonally.

Instead of the upper surface of the piston 16 being able to come in contact with the lower surface of the valve member 63, a protrusion portion protruding radially outward from the outer peripheral wall of the piston rod 17 (and also forming a part of the piston rod 17) may be made to come in contact with the lower surface of the valve member 63.

In addition, it goes without saying that various other changes can be made within a range that can be imagined by those skilled in the art.

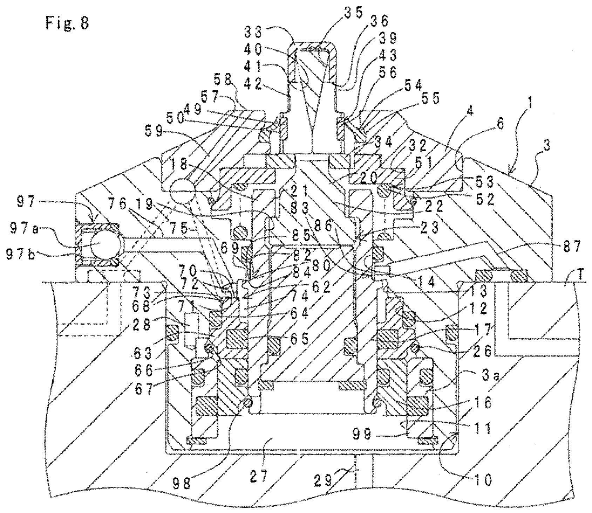

FIGS. 8 to 11 show a fourth embodiment of the present invention. In this fourth embodiment, the same member (or similar member) as the constituent member of the first embodiment will be described by reference numerals as a general rule.

In the first embodiment, a mounting groove is formed circumferentially on the inner peripheral wall of the third hole 13 of the cylinder hole 10, and a ring-shaped sealing member 81 is mounted in the mounting groove. The sealing member 81 is received by the step portion (ceiling surface of the third hole) 82 from above, crushed by the piston 16 moved near the upper limit position, and then the piston 16 is received by the step portion 70 via the valve member 63. Therefore, in the release state of the clamp device in which the piston 16 has moved to the upper limit position, the second detection valve 80 is reliably closed and the first detection valve 62 is reliably closed.

In the first embodiment, the piston 16 is fitted onto the lower side of the piston rod 17, and a retaining ring 98 is attached to the lower side of the piston 16 so that the positions of the piston 16 and the piston rod 17 do not change relative to each other vertically. The piston 16 is sandwiched between the retaining ring 98 and a diameter changing portion S of the piston rod 17 to fix its position (see FIG. 1). The upward movement of the piston 16 is stopped when the piston 16 hits the sealing member 81, but at this time the second detection valve 80 must be reliably closed. Therefore, by allowing slight crushing by using the sealing member 81 of the first embodiment, positional deviation between the piston 16 and the piston rod 17 is allowed.

In the fourth embodiment, the piston 16 and the piston rod 17 allow their positions to vary in the axial direction. In the fourth embodiment, there is no diameter changing portion S for regulating the upper limit position of the piston 16 extrapolated onto the piston rod 17. Amajor change in the fourth embodiment is that the piston 16 is not fixed to the piston rod 17 and is slidable. Specifically, the diameter of the piston rod 17 into which the piston 16 is inserted is made uniform within a predetermined range so that the piston 16 can slide axially. In the present embodiment, the position of the manipulation part 69 is made uniform in order to simplify piston rod manufacturing. On the other hand, the lower limit position of the piston 16 is regulated by the retaining ring 98. Therefore, the piston 16 is movable to the position of the manipulation part 69 if there is no valve member 63.

Another major change from the first embodiment is that a trap valve 97 is added to the discharge path 76. Then, a pipe member is installed in the cylinder hole 10 bored in the housing 1, and the inner wall thereof is used as the first hole 11 in which the piston 16 slides.

The trap valve 97 is a valve that opens and closes by lateral movements of a ball 97a. The trap valve 97 prevents dirt (foreign matter) from outside and moisture such as coolant from flowing into the housing 1. A spring 97b of the trap valve 97 has a small spring constant and shrinks even with a weak force from the inside. When the ball 97a moves in the left direction, the trap valve 97 opens.

In the clamp device in the release state shown in FIG. 8, the piston 16 is received by the step portion 70 of the housing 1 through the valve member 63. According to this, the first valve surface 72 of the valve member 63 is engaged with the first valve seat 71, and the first detection valve 62 for overstroke detection is closed.

In the release state, the piston rod 17 is moved to the upper limit position. Therefore, the second valve surface 85 of the manipulation part 69 of the piston rod 17 is engaged with the second valve seat 84, and the second detection valve 80 for release detection is closed.

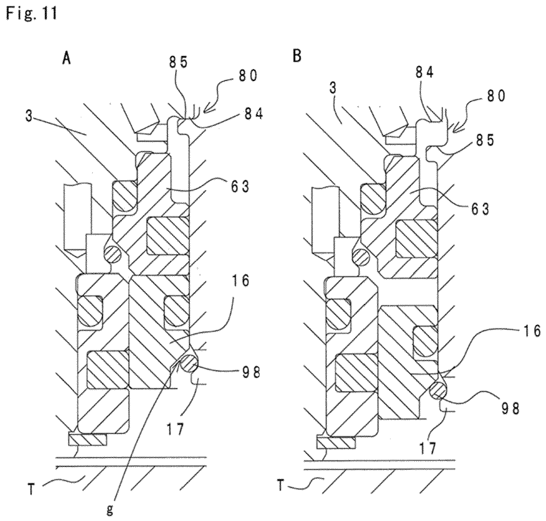

FIG. 11 is a partially enlarged view that explains the relationship between the piston 16 and the piston rod 17. The piston 16 and the piston rod 17 rise independently each other when pressure oil is supplied to the release chamber 27. In FIG. 11A, the piston 16 is slightly shifted upward with respect to the piston rod 17, and a gap g is generated between the piston 16 and the retaining ring 98. That is, closing of the second detection valve 80 and closing of the first detection valve 62 are performed independently of each other, and as a result, the gap g is generated. The gap g is a position deviation between the piston 16 and the piston rod 17, and by allowing the piston 16 to slide within a predetermined range relative to the piston rod 17, the existence of the gap g is allowed and critical assembly accuracy is not required. Further, since the sealing member 81 of the first embodiment is no longer required, the number of parts can be reduced and man-hours can be reduced.

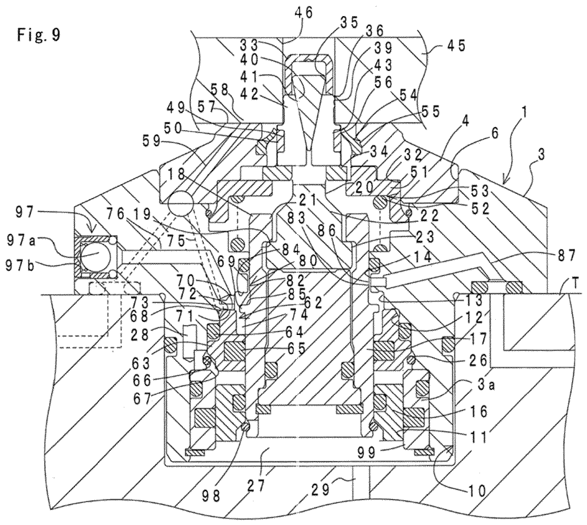

FIG. 9 shows the lock state. The pressure oil in the release chamber 27 is discharged and pressure oil is supplied to the lock chamber 26. The piston rod 17 and the clamp rod 20 are lowered toward the lock position. At this time, the second valve surface 85 formed on the manipulation part 69 of the piston rod 17 is separated from the second valve seat 84, and the second detection valve 80 is opened. By opening the second detection valve 80, the trap valve 97 is opened, and the compressed air in the second valve chamber 83 is discharged from the discharge path 76.

On the other hand, the manipulation part 69 of the piston rod 17 is separated from the valve member 63 at a predetermined distance upward, and the manipulation part 69 does not manipulate the valve member 63. Therefore, the state in which the valve member 63 is raised to the upper limit position is maintained by pressure oil supplied to the lock chamber 26. Therefore, the first valve surface 72 is engaged with the first valve seat 71, and the closing of the first detection valve 62 is maintained.

In FIG. 11B, the piston 16 is lowered and hits the retaining ring, causing the gap g to disappear. Then, the piston 16 and the piston rod 17 are lowered integrally. Thus, when switching from the release state to the locked state, the piston 16 and the piston rod 17 are restrained by the retaining ring 98.

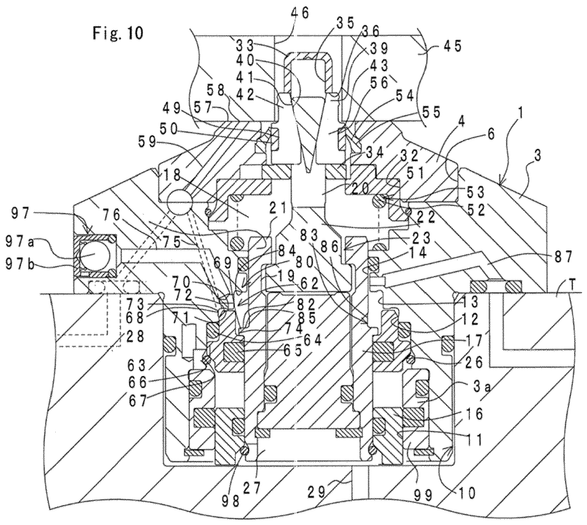

FIG. 10 shows an overstroke state of the clamp device. As in the first embodiment, the manipulation part 69 of the piston rod 17 engages with the valve member 63, and the manipulation part 69 lowers the valve member 63. The first detection valve 62 is opened. The compressed air in the first inlet chamber 73 of the first valve chamber 68 merges with the compressed air from the opening of the second detection valve 80, and then, is discharged from the discharge path 76.

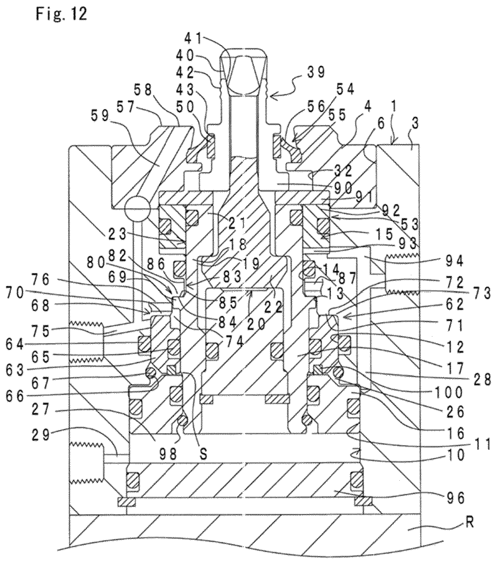

FIG. 12 shows the fifth embodiment of the present invention. The fifth embodiment is substantially the same as the third embodiment of FIG. 4, but with some changes. In principle, the same member (or similar member) as the constituent member will be described with the same reference number.

Even in the clamp device of FIG. 4, the piston 16 is extrapolated onto the lower side of the piston rod 17 and the retaining ring 98 is attached to the lower side of the piston 16 so that the positions of the piston 16 and the piston rod 17 do not change relative to each other vertically. The piston 16 is sandwiched between the retaining ring 98 and the diameter change portion S of the piston rod 17 to fix its position.

The upward movement of the piston rod 17 is stopped when the second valve seat 84 hits the second valve surface, but at this time, the first detection valve 62 must be reliably closed by the valve member 63 pushed up by the piston 16. Therefore, in the clamp device of FIG. 4, the sealing member 95 of the valve member 63 is provided between the valve member 63 and the step portion 70 of the housing. Using the sealing member 95 of the fourth embodiment allows a slight crushing, thereby allowing misalignment between the piston 16 and the piston rod 17.

On the other hand, in the clamp device of FIG. 12, the sealing member 95 of the valve member 63 is omitted, and the first detection valve 62 is configured only by the first valve seat 71 and the first valve surface 72. Then, an elastic material 100 is provided between the piston 16 and the valve member 63. When the piston 16 moves near the upper limit position, the second detection valve 80 is closed. Thereafter, the piston 16 comes in contact with the elastic material 100 and crushes it slightly. Next, the piston 16 comes in contact with the first valve seat 71 of the step portion 70 through the sealing member 95 and the valve member 63, and the first detection valve 62 is closed.

As the elastic material 100, a member of the same material as the sealing member 95 may be used. Further, a spring may be used as the elastic material 100.

### [DESCRIPTION OF THE PREFERANCE NUMERAL]

- 1: housing
- 10: cylinder hole
- 16: piston
- 23: output member
- 39: engagement material
- 41: wedge portion
- 45: object to be clamped (workpiece)
- 46: hole
- 61: first flow path
- 62: first detection valve
- 63: valve member
- 69: manipulation part
- 71: first valve seat
- 72: first valve surface
- 79: second flow path
- 80: second detection valve
- 84: second valve seat
- 85: second valve surface

## Claims

1. A clamp device, comprising:
a piston (16) inserted into a cylinder hole (10) formed in a housing (1) so as to be capable of moving in an axial direction;
an output member (23) protruding from the piston (16) toward a tip side in the axial direction;
an engagement member (39) that engages with a wedge portion (41) formed on the output member (23) and that moves in a direction intersecting the axial direction by a movement of the output member (23) in the axial direction, being externally fitted by a hole (46) of an object to be clamped (45) and capable of engaging on an inner peripheral surface of the hole (46);
a first flow path (61) for pressure fluid for detection formed in the housing (1);
a first detection valve (62) provided in a middle of the first flow path (61), blocking or opening the first flow path (61) by locating the piston (16) or the output member (23) at a predetermined position on a base end side in the axial direction;
a second flow path (79) for pressure fluid for detection formed in the housing (1); and
a second detection valve (80) provided in a middle of the second flow path (79), blocking or opening the second flow path (79) by locating the piston (16) or the output member (23) at a predetermined position on the tip side in the axial direction, said first detection valve (62) comprising;
a cylindrical valve member (63) inserted between an outer peripheral surface of the output member (23) and an inner peripheral surface of the cylinder hole (10) so as to be capable of moving in the axial direction in a tight manner, being faced to the piston (16) or the output member (23) at a predetermined interval in the axial direction so as to be capable of being contacted;
a manipulation portion (69) protruding from an outer peripheral wall of the output member (23) in a direction intersecting with respect to the axial direction, being faced to the valve member (63) at a predetermined interval in the axial direction so as to be capable of engaging;
a first valve seat (71) formed in the cylinder hole (10); and
a first valve surface (72) formed on the valve member (63) and capable of engaging with the first valve seat (71),
said second detection valve (80) comprising:
a second valve seat (84) formed in the cylinder hole (10); and
a second valve surface (85) formed on the manipulation portion (69) and capable of engaging with the second valve seat (84).

2. The clamp device according to claim 1, wherein the piston (16) is extrapolated onto a piston rod (17) of the output member (23) and capable of sliding in the axial direction within a predetermined range with respect to the piston rod (17), and wherein the first detection valve (62) and the second detection valve (80) are each closed by independent operations of the piston (16) and the piston rod (17).

## Patentansprüche

1. Klemmenvorrichtung mit:
einem Kolben (16), der in ein Zylinderloch (10), das in einem Gehäuse (1) ausgebildet ist, so eingesetzt ist, dass dieser in einer axialen Richtung bewegbar ist;
einem Ausgabeteil (23), das von dem Kolben (16) in Richtung einer Spitzenseite in der axialen Richtung vorsteht;
einem Eingriffsteil (39), das mit einem Keilabschnitt (41), der auf dem Ausgabeteil (23) ausgebildet ist, in Eingriff ist und das sich durch eine Bewegung des Ausgabeteils (23) in der axialen Richtung in einer Richtung, die die axiale Richtung schneidet, bewegt, welches extern durch ein Loch (46) eines zu klemmenden Objekts (45) montierbar ist und dazu angepasst ist, an einer inneren Umfangsoberfläche des Lochs (46) einzugreifen;
einem ersten Strömungspfad (61) für ein Druckfluid zur Erfassung, der in dem Gehäuse (1) ausgebildet ist;
einem ersten Erfassungsventil (62), das in einer Mitte des ersten Strömungspfads (61) angeordnet ist und das den ersten Strömungspfad (61) blockiert oder öffnet durch ein Lokalisieren des Kolbens (16) oder des Ausgabeteils (23) an einer vorbestimmten Position auf einer Basisendseite in der axialen Richtung;
einem zweiten Strömungspfad (79) für ein Druckfluid zur Erfassung, der in dem Gehäuse (1) ausgebildet ist; und
einem zweiten Erfassungsventil (80), das in einer Mitte des zweiten Strömungspfads (79) angeordnet ist und das den zweiten Strömungspfad (79) blockiert oder öffnet durch ein Lokalisieren des Kolbens (16) oder des Ausgabeteils (23) an einer vorbestimmten Position auf der Spitzenseite in der axialen Richtung;
welches erste Erfassungsventil (62) aufweist:
ein zylindrisches Ventilteil (63), das zwischen einer äußeren Umfangsoberfläche des Ausgabeteils (23) und einer inneren Umfangsoberfläche des Zylinderlochs (10) so eingesetzt ist, dass es in der axialen Richtung in einer dichten Weise bewegbar ist, welches dem Kolben (16) oder dem Ausgabeteil (23) mit einem vorbestimmten Zwischenraum in der axialen Richtung so gegenüberliegt, dass es kontaktierbar ist;
einen Betätigungsabschnitt (69), der von einer äußeren Seitenwand des Ausgabeteils (23) in eine Richtung vorsteht, die die axiale Richtung schneidet, welcher dem Ventilteil (63) mit einem vorbestimmten Zwischenraum in der axialen Richtung so gegenüberliegt, dass diese in Eingriff bringbar sind;
einen ersten Ventilsitz (71), der in dem Zylinderloch (10) ausgebildet ist; und
eine erste Ventiloberfläche (72), die auf dem Ventilteil (63) ausgebildet ist und mit dem ersten Ventilsitz (71) in Eingriff bringbar ist,
welches zweite Erfassungsventil (80) aufweist:
einen zweiten Ventilsitz (84), der in dem Zylinderloch (10) ausgebildet ist; und
eine zweite Ventiloberfläche (85), die auf dem Betätigungsabschnitt (69) ausgebildet ist und mit dem zweiten Ventilsitz (84) in Eingriff bringbar ist.

2. Klemmenvorrichtung nach Anspruch 1, bei der der Kolben (16) an eine Kolbenstange (17) des Ausgabeteils (23) angepasst ist und in der axialen Richtung innerhalb eines vorbestimmten Bereichs relativ zu der Kolbenstange (17) gleitend beweglich ist, und bei der das erste Erfassungsventil (62) und das zweite Erfassungsventil (80) jeweils durch unabhängige Betätigungen des Kolbens (16) und der Kolbenstange (17) geschlossen werden.

## Revendications

1. Dispositif de serrage, comprenant :
un piston (16) inséré dans un trou cylindrique (10) formé dans un boîtier (1) de manière à pouvoir se déplacer dans une direction axiale ;
un élément de sortie (23) faisant saillie à partir du piston (16) vers un côté d'extrémité dans la direction axiale ;
un élément d'engagement (39) qui s'engage avec une partie de coin (41) formée sur l'élément de sortie (23) et qui se déplace dans une direction perpendiculaire à la direction axiale par un mouvement de l'élément de sortie (23) dans la direction axiale, étant monté à l'extérieur par un trou (46) d'un objet à serrer (45) et capable de s'engager sur une surface périphérique intérieure du trou (46) ;
un premier trajet d'écoulement (61) pour le fluide sous pression destiné à la détection, formé dans le boîtier (1) ;
une première soupape de détection (62) prévue au milieu du premier trajet d'écoulement (61), bloquant ou ouvrant le premier trajet d'écoulement (61) en plaçant le piston (16) ou l'élément de sortie (23) à une position prédéterminée sur un côté d'extrémité de base dans la direction axiale ;
un deuxième trajet d'écoulement (79) pour le fluide sous pression pour la détection, formé dans le boîtier (1) ; et
une deuxième soupape de détection (80) prévue au milieu du deuxième trajet d'écoulement (79), bloquant ou ouvrant le deuxième trajet d'écoulement (79) en plaçant le piston (16) ou l'élément de sortie (23) à une position prédéterminée sur le côté d'extrémité dans la direction axiale, ladite première soupape de détection (62) comprenant ;
un élément de soupape cylindrique (63) inséré entre une surface périphérique extérieure de l'élément de sortie (23) et une surface périphérique intérieure du trou cylindrique (10) de manière à pouvoir se déplacer dans la direction axiale de manière étanche, faisant face au piston (16) ou à l'élément de sortie (23) à un intervalle prédéterminé dans la direction axiale de manière à pouvoir être en contact ;
une partie de manipulation (69) faisant saillie à partir d'une paroi périphérique extérieure de l'élément de sortie (23) dans une direction perpendiculaire à la direction axiale, faisant face à l'élément de soupape (63) à un intervalle prédéterminé dans la direction axiale de manière à pouvoir s'engager ;
un premier siège de soupape (71) formé dans le trou cylindrique (10) ; et
une première surface de soupape (72) formée sur l'élément de soupape (63) et pouvant s'engager avec le premier siège de soupape (71),
ladite deuxième soupape de détection (80) comprenant :
un deuxième siège de soupape (84) formé dans le trou cylindrique (10) ; et
une deuxième surface de soupape (85) formée sur la partie de manipulation (69) et capable de s'engager avec le deuxième siège de soupape (84).

2. Dispositif de serrage selon la revendication 1, dans lequel le piston (16) est extrapolé sur une tige de piston (17) de l'élément de sortie (23) et capable de coulisser dans la direction axiale dans une plage prédéterminée par rapport à la tige de piston (17), et dans lequel la première soupape de détection (62) et la deuxième soupape de détection (80) sont chacune fermées par des opérations indépendantes du piston (16) et de la tige de piston (17).
